# EUROPEAN PATENT APPLICATION

(11) **EP 4 640 719 A1**
(43) Date of publication of application: **29.10.2025**
(21) Application number: 23907080.8
(22) Date of filing: 20.12.2023
(51) Int. Cl.: C08F 6/10, C08F 290/12, G02C 7/04

(54) **METHOD FOR PRODUCING POLYMER, METHOD FOR PRODUCING CURABLE COMPOSITION, METHOD FOR PRODUCING CURED PRODUCT, AND METHOD FOR PRODUCING CONTACT LENS USING CURABLE COMPOSITION**

(30) Priority: 23.12.2022 JP 2022206597; 11.09.2023 JP 2023146954; 20.10.2023 JP 2023181047
(71) Applicant: Nippon Kayaku Kabushiki Kaisha, Tokyo 100-0005 (JP); Seed Co., Ltd., Tokyo 113-8402 (JP)
(72) Inventor: KOBAYASHI, Daisuke, Tokyo 115-8588 (JP); HIJIKATA, Daichi, Tokyo 115-8588 (JP); MASHIMO, Takushi, Tokyo 115-8588 (JP); YAMAZAKI, Yoshiko, Tokyo 113-8402 (JP); TAKEMURA, Honoka, Tokyo 113-8402 (JP); SATO, Takao, Tokyo 113-8402 (JP)
(74) Representative: Gille Hrabal Partnerschaftsgesellschaft mbB Patentanwälte
(86) International application number: PCT/JP2023/045655
(87) International publication number: WO 2024/135720

(57) **Abstract**

The present invention provides: a method for producing a high-purity polymer (A); and a method for producing a silicone hydrogel lens at a low cost. A method for producing a polymer (A) according to the present invention comprises: (step 1) a step of obtaining a polymer (A1) by polymerizing a first monomer (a) that has one ethylenically unsaturated group; (step 2) a step of obtaining a polymer (A2) by having the polymer (A1) react with a second monomer that has an ethylenically unsaturated group; and (step 3) a step of obtaining a polymer (A) by purifying the polymer (A2) with use of a subcritical or supercritical fluid. The first monomer is selected from one of the first group consisting of hydroxyl group-containing monomers, and the second group consisting of isocyanate compounds of (meth)acrylic acids, anhydrides of (meth)acrylic acids, and halides of (meth)acrylic acids. The second monomer is selected from the other of the first group and the second group.

## Description

### TECHNICAL FIELD

The present invention relates to a method for producing a polymer, a method for producing a curable composition containing the polymer, a method for producing a cured product obtained by curing the curable composition, and a method for producing a hydrogel contact lens using the curable composition.

### BACKGROUND ART

Since there are no blood vessels in the eye tissue, the supply of oxygen required to keep eye cells healthy cannot be achieved through blood, but is achieved directly from the atmosphere through the cornea. When contact lenses are worn, the supply of oxygen to the cornea is hindered, and wearing contact lenses for a long period of time can cause anoxia in the cornea, leading to eye diseases such as hyperemia, corneal edema, and vascular infiltration. Therefore, oxygen permeability, which is one of the physical properties of contact lenses, is an important property that affects the amount of oxygen supplied to eye cells.

Contact lenses are broadly classified into hard contact lenses (HCL) and soft contact lenses (SCL). HCL has excellent optical properties and oxygen permeability, but has the drawback that it is prone to cause a foreign body sensation when worn due to the hardness of the material. SCL has excellent wearing comfort, but has the drawback that the material has low oxygen permeability.

In recent years, silicone hydrogel contact lenses (SHGCLs), which combine the high oxygen permeability of HCLs with the excellent wearing comfort of SCLs, have been developed and are becoming widely used.

However, the production cost of SHGCL is significantly higher than that of SCL that does not contain a silicon-containing monomer. This is because the production of SHGCL requires the use of a large amount of organic solvent such as isopropanol or methyl ethyl ketone (several times to several hundred times the dry weight of the lens) to remove unreacted silicon-containing monomer from the cured product after curing.

In addition, flammable organic solvents such as isopropanol and methyl ethyl ketone (hazardous materials under the Fire Service Act of Japan) pose a high risk of fire and other disasters, and explosion-proof equipment is required as a disaster prevention measure, resulting in huge equipment costs.

Accordingly, various investigations have been conducted with the aim of efficiently removing unreacted monomers and impurities in the production of contact lenses, particularly silicone hydrogel contact lenses.

For example, for the purpose of improving the solubility in water of a vinyl monomer containing a tris(trimethylsilyloxy)silyl group (hereinafter referred to as a TRIS group), a method for producing a vinyl monomer containing a TRIS group by reacting a vinyl monomer containing a TRIS group having a solubility or dispersibility of at least about 5% by weight in water with an actinic radiation-crosslinkable silicone-containing prepolymer made thereof has been disclosed (see Patent Document 1).

Also disclosed is a method for producing a silicone hydrogel lens, in which a polymerizable composition comprising a copolymerizable siloxane compound, first and second hydrophilic monomers, and first and second crosslinkable monomers is irradiated with ultraviolet light in two stages, and then unreacted components are extracted using only an aqueous solution (see Patent Document 2).

Furthermore, a method has been disclosed in which a contact lens composition containing an alcohol group-containing polysiloxane dimethacrylate is polymerized in a contact lens molding mold made of polyethylene vinyl alcohol resin to obtain a polymer, and then the polymer is treated under low pressure with supercritical carbon dioxide, or with supercritical carbon dioxide and an extraction aid (entrainer), thereby removing unpolymerized monomers and impurities (see Patent Document 3).

### CITATION LIST

### PATENT LITERATURE

[Patent Document 1] Japanese Patent No. 6065988
[Patent Document 2] Japanese Patent No. 6906556
[Patent Document 3] Japanese Patent No. 3640934

### SUMMARY OF INVENTION

### TECHNICAL PROBLEM

However, in the vinyl monomer containing a TRIS group obtained by the method described in Patent Document 1, the TRIS group does not have sufficient solubility or dispersibility in water, and it is therefore considered difficult to extract the unreacted vinyl monomer containing a TRIS group with water from a silicone-containing prepolymer that contains this monomer as a constituent component.

According to the method described in Patent Document 2, it is said that the siloxane compound that is difficult to dissolve in water is completely polymerized without remaining. However, it is difficult to imagine that 100% of the siloxane compound is polymerized. In addition, the raw material compound of the silicon-containing monomer that exists as an impurity in the siloxane compound is not incorporated into the polymer network and has low solubility in water, so an organic solvent must be used to remove the raw material compound of the silicon-containing monomer.

In Patent Document 3, when the target object is subjected to treatment with a supercritical fluid under a high pressure exceeding 20 MPa, the object is less easily separable from the mold and is more likely to have minute defects on its surface, so the treatment is carried out under a low pressure of 6 MPa to 16 MPa. However, although treatment with a supercritical fluid under low pressure reduces the adverse effects on the target object, the effect of removing unreacted materials and impurities is naturally reduced. Therefore, there is room for investigation into a method for effectively removing impurities and the like without reducing workability or causing defects in the target object.

As described above, with conventional techniques, it has been difficult to effectively remove silicon-containing compounds from the polymer network of silicone hydrogel, which contains poorly water-soluble silicon-containing compounds as its components, without using flammable organic solvents (hazardous materials under the Fire Service Act of Japan) and without causing adverse effects on the material being treated.

The present invention has been made in view of the above circumstances, and has an object to provide a manufacturing method for obtaining a high-purity polymer (having a low impurity content), and to provide an inexpensive manufacturing method for a silicone hydrogel lens containing the polymer.

### SOLUTION TO PROBLEM

The present invention relates to the following [1] to [18]. Note that in this application, "(Numerical value 1) to (Numerical value 2)" indicates that the upper and lower limits are included.
[1] A method for producing a polymer (A), comprising:
   (step 1) polymerizing a first monomer (a) having an ethylenically unsaturated group to obtain a polymer (A1);
   (step 2) reacting the polymer (A1) with a second monomer having an ethylenically unsaturated group to obtain a polymer (A2); and
   (step 3) purifying the polymer (A2) using a subcritical or supercritical fluid to obtain a polymer (A),
   wherein the first monomer is selected from one of:
      a first group consisting of hydroxy group-containing monomers; and
      a second group consisting of (meth)acrylic isocyanate compounds, (meth)acrylic anhydrides, and (meth)acrylic acid halide, and
   the second monomer is selected from the other of the first group or the second group.
[2] The method for producing the polymer (A) according to the above item [1], wherein a silicon-containing monomer (b) having one ethylenically unsaturated group is polymerized together with the first monomer (a) in the step 1.
[3] The method for producing the polymer (A) according to the above item [2], further comprising polymerizing an amide group-containing monomer (c) in the step 1.
[4] The method for producing the polymer (A) according to the above item [3], wherein in the (step 1), the first monomer (a), the silicon-containing monomer (b), and the amide group-containing monomer (c) are polymerized together with an alkyl group-containing monomer (d) having one ethylenically unsaturated group and having 1 to 18 carbon atoms.
[5] The method for producing the polymer (A) according to any one of the above items [1] to [4], wherein the first monomer is a hydroxy group-containing monomer.
[6] The method for producing the polymer (A) according to the above item [5], wherein the second monomer is a (meth)acrylic isocyanate compound.
[7] The method for producing the polymer (A) according to the above item [5], wherein the second monomer is a (meth)acrylic anhydride.
[8] The method for producing the polymer (A) according to the above item [5], wherein the second monomer is a (meth)acrylic acid halide.
[9] The method for producing the polymer (A) according to any one of the above items [1] to [4], wherein
   the first monomer is a (meth)acrylic isocyanate compound, and
   the second monomer is a hydroxy group-containing monomer.
[10] The method for producing the polymer (A) according to any one of the above items [1] to [9], wherein carbon dioxide alone is used as the subcritical or supercritical fluid.
[11] The method for producing the polymer (A) according to any one of the above items [1] to [9], wherein a mixture of carbon dioxide and an entrainer is used as the subcritical or supercritical fluid.
[12] The method for producing the polymer (A) according to the above item [11], wherein the mixture of carbon dioxide and an entrainer comprises 80.0 to 99.9% by weight of carbon dioxide and 0.1 to 20.0% by weight of an entrainer.
[13] The method for producing the polymer (A) according to item [11] or [12] above, wherein the entrainer is one or more selected from the group consisting of methanol, ethanol, 1-propanol, 2-propanol, 2-methoxyethanol, and 1,4-dioxane.
[14] The method for producing the polymer (A) according to any one of the above items [1] to [13], wherein the polymer (A) has a weight average molecular weight of 5,000 to 300,000.
[15] A method for producing a curable composition comprising:
   the polymer (A) according to any one of items [1] to [14],
   a hydrophilic monomer (B), and
   a radical polymerization initiator (C).
[16] A method for producing a cured product obtained from the curable composition according to item [15].
[17] A method for producing the curable composition according to item [15], which is used for a contact lens.
[18] A method for producing a silicone hydrogel contact lens, using the curable composition for use in the contact lens according to item [17].

### ADVANTAGEOUS EFFECTS OF INVENTION

According to the manufacturing method of the present invention, it is possible to obtain a high-purity polymer and a silicone hydrogel contact lens comprising the polymer. In addition, the cured product of the curable composition consisting of a high-purity polymer, a hydrophilic monomer, and a polymerization initiator, or the silicone hydrogel lens obtained by the method of the present invention, can be easily cleaned, and can be produced inexpensively. Since it is possible to remove the poorly water-soluble silicon-containing compounds present in the hydrophilic polymer network without using flammable organic solvents (hazardous materials under the Fire Service Act of Japan), the safety and efficiency of work are improved.

Furthermore, since the method of the present invention uses the polymer as a component of a silicone hydrogel contact lens, it is expected that the process of extracting impurities after formation of the contact lens will be easier, thereby making it possible to reduce manufacturing costs.

### BRIEF DESCRIPTION OF DRAWINGS

FIG. 1 is a GPC chart of polymer (P-5).
FIG. 2 is a GPC chart of polymer (P-6).
FIG. 3 is a GPC chart of FM-0711.

### DESCRIPTION OF EMBODIMENTS

In this specification, "(meth)acrylic" means "acrylic" and/or "methacrylic", and "(meth)acrylate" means "acrylate" and/or "methacrylate". Furthermore, in this specification, "%" and "parts" are all written on a weight basis unless otherwise specified.

The method for producing the polymer (A) of the present invention includes the following (Step 1) to (Step 3).

(Step 1) A step of polymerizing a first monomer (a) having an ethylenically unsaturated group to obtain a polymer (A1)

(Step 2) A step of reacting the polymer (A1) with a second monomer having an ethylenically unsaturated group to obtain the polymer (A2).

(Step 3) A step of purifying the polymer (A2) using a subcritical or supercritical fluid to obtain the polymer (A).

The first monomer is selected from one of the following first and second groups, and the second monomer is selected from the other of the first or second groups.
First group: hydroxy group-containing monomers
Second group: (meth)acrylic isocyanate compounds, (meth)acrylic anhydrides, and (meth)acrylic acid halides

Each component in the first and second groups will be described below.

### First group: hydroxy group-containing monomers

The hydroxy group-containing monomer has one ethylenically unsaturated group and does not have silicon. The ethylenically unsaturated group in the present invention is a curable substituent, and examples thereof include a styryl group, a vinyl group, an allyl group, a maleimide group, a (meth)acryloyl group, and a (meth)acrylamide group.

Examples of hydroxy group-containing monomers include acrylic acid, methacrylic acid, 2-hydroxyethyl (meth)acrylate, 3-hydroxypropyl (meth)acrylate, 2-hydroxybutyl (meth)acrylate, 4-hydroxybutyl (meth)acrylate, glycerol (meth)acrylate, butoxyethylene glycol (meth)acrylate, caprolactone-modified 2-hydroxyethyl (meth)acrylate, N-(4-hydroxyphenyl)maleimide, polyethylene glycol mono(meth)acrylate, polypropylene glycol mono(meth)acrylate, polytetramethylene glycol mono(meth)acrylate, and N- (2-hydroxyethyl)acrylamide.

### Second group: (meth)acrylic isocyanate compounds

The (meth)acrylic isocyanate compounds are acrylic acid esters or methacrylic acid esters having an isocyanate group.

Examples of the (meth)acrylic isocyanate compounds include 2-isocyanatoethyl methacrylate (trade name: Karenz MOI, manufactured by Resonac Corporation), 2-isocyanatoethyl acrylate (trade name: Karenz AOI, manufactured by Resonac Corporation), 2-(2- methacryloyloxyethyloxy) ethyl isocyanate (trade name: Karenz MOI-EG, manufactured by Resonac Corporation), and 1,1-(bisacryloyloxymethyl) ethyl isocyanate (trade name: Karenz BEI, manufactured by Resonac Corporation).

When a hydroxy group-containing monomer is used as the first monomer (a) and a (meth)acrylic isocyanate compound is used as the second monomer, the polymer (A1) obtained in step 1 can be reacted with the (meth)acrylic isocyanate compound in step 2 to obtain the polymer (A2).

Specifically, this is a reaction in which an isocyanate compound having a (meth)acrylate group is added to the hydroxy groups of the polymer (A1), and the reaction temperature is preferably 70 to 100 °C The isocyanate compound having a (meth)acrylate group is mixed and reacted in such an amount that the amount of the isocyanate group is preferably 1.0 to 1.2 equivalents, more preferably 1.05 to 1.1 equivalents, per equivalent of the hydroxy groups of the polymer (A1).

On the other hand, when a (meth)acrylic isocyanate compound is used as the first monomer (a) and a hydroxy group-containing monomer is used as the second monomer, the polymer (A1) obtained in step 1 can be reacted with the hydroxy group-containing monomer in step 2 to obtain the polymer (A2).

Specifically, the reaction is carried out by adding a hydroxy group-containing monomer to the isocyanate group of the polymer (A1), and the reaction temperature is preferably 70 to 100°C. The hydroxy group-containing monomer is mixed and reacted in such an amount that the amount of hydroxy groups is preferably 1.0 to 1.2 equivalents, more preferably 1.05 to 1.1 equivalents, per equivalent of the isocyanate group of the polymer (A1).

It is preferable to use a catalyst such as dibutyltin dilaurate in order to promote the addition reaction between the hydroxy group and the isocyanate group in step 2. In addition, a polymerization inhibitor such as paramethoxyphenol, methylhydroquinone, dibutylhydroxytoluene, etc. can also be used to prevent polymerization during the reaction.

### Second group: (meth)acrylic anhydride

The (meth)acrylic anhydride refers to acrylic anhydride and/or methacrylic anhydride.

When a hydroxy group-containing monomer is used as the first monomer (a) and (meth)acrylic anhydride is used as the second monomer, the polymer (A2) can be obtained by reacting the polymer (A1) obtained in step 1 with acrylic anhydride and/or methacrylic anhydride.

Specifically, this is a reaction in which acrylic anhydride and/or methacrylic anhydride are added to the hydroxy groups of the polymer (A1), and the reaction temperature is preferably 80 to 120°C. The acrylic anhydride and/or methacrylic anhydride are mixed and reacted in an amount of preferably 1.0 to 1.2 equivalents, more preferably 1.05 to 1.1 equivalents, per equivalent of the hydroxy groups of the polymer (A1).

In order to promote the reaction, it is preferable to use a catalyst such as triphenylphosphine, 2,4,6-tris(dimethylaminomethyl)phenol, triethanolamine, tetraethylammonium chloride, trimethylglycine, etc. In addition, in order to prevent polymerization during the reaction, a polymerization inhibitor such as paramethoxyphenol, methylhydroquinone, dibutylhydroxytoluene, etc. can also be used.

### Second group: (meth)acrylic acid halides

Specific examples of the (meth)acrylic acid halides include (meth) acrylic acid fluoride, (meth)acrylic acid chloride, (meth) acrylic acid bromide, and (meth)acrylic acid iodide.

When a hydroxy group-containing monomer is used as the first monomer (a) and a (meth)acrylic acid halide is used as the second monomer, the polymer (A1) obtained in step 1 can be reacted with the (meth)acrylic acid halide to obtain the polymer (A2). Specifically, it is a dehydrohalogenation reaction between the hydroxy groups of the polymer (A1) and the halogen groups of the (meth)acrylic acid halide. The reaction temperature is preferably 30 to 100°C. The (meth)acrylic acid halide is preferably used in an amount equivalent to the hydroxy groups of the polymer (A1). In order to prevent polymerization during the reaction, a polymerization inhibitor such as paramethoxyphenol, methylhydroquinone, or dibutylhydroxytoluene may be used.

Since the reaction between the polymer (A1) and a (meth)acrylic acid halide is a dehydrohalogenation reaction, it is preferable to add a tertiary amine to the reaction solution in advance in order to trap the hydrogen halide generated and further promote the reaction. Examples of the tertiary amine include triethylamine, pyridine, and 1-methylimidazole. The amount of the tertiary amine used is preferably equimolar to 2 times by mole relative to the amount of (meth)acrylic acid chloride, and more preferably equimolar to 1.5 times by mole relative to the amount of (meth)acrylic acid chloride.

The content of the first monomer (a) (hereinafter also referred to as "component (a)") in the polymer (A1) is not particularly limited, but is, for example, 0.01 to 100% by weight, preferably 0.1 to 30 parts by weight, more preferably 0.1 to 10% by weight, and even more preferably 0.2 to 5% by weight, based on the total weight of all comonomer components. Here, the term "all comonomer components" refers to all comonomer components that are raw materials for the polymer (A1). That is, the component (a), the component (b) and the component (c) described below, and do not include a polymerization initiator, etc. If the amount of the component (a) is less than 0.01% by weight, the reactivity becomes poor. The component (a) can be used by mixing one type or two or more types in any ratio.

In step 1, polymer (A1) may be obtained by polymerizing a silicon-containing monomer (b) having one ethylenically unsaturated group (hereinafter also referred to as "component (b)") together with component (a). Component (b) is a component that contributes to the flexibility of polymer (A).

Component (b) is a silicon-containing monomer having one ethylenically unsaturated group. Component (b) is not particularly limited, but examples thereof include α-(meth)acryloxy-ω-butylpolydimethylsiloxane, (meth)acryloxypropyltris(trimethylsiloxy)silane, (meth)acrylamide silicone, (meth)acryloxyethylcarbamoyloxy silicone, and silicone (meth)acrylate represented by the following formula (1). The silicone (meth)acrylate represented by the following formula (1) is commercially available as FM-0711 (manufactured by JNC Corporation, molecular weight 1,000), etc. Component (b) can be used alone or in a mixture of two or more kinds in any ratio.

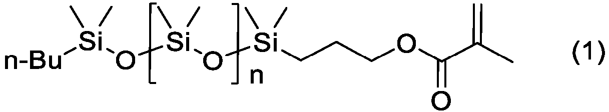

The content of component (b) in polymer (A1) is not particularly limited, but is, for example, 20 to 90% by weight, preferably 30 to 80% by weight, and more preferably 40 to 70% by weight, based on the total weight of all comonomer components. If the content is less than 20% by weight, the oxygen permeability and flexibility of the resulting cured product will decrease. If the content is more than 90% by weight, the surface lubricity of the cured product will be poor.

In step 1, polymer (A1) may be obtained by polymerizing amide group-containing monomer (c) (hereinafter also referred to as "component (c)") having one ethylenically unsaturated group together with components (a) and (b). Component (c) is a monomer that does not have a hydroxy group or silicon, has an amide group, and dissolves in water at any ratio. Component (c) is a component that contributes to improving the hydrophilicity of polymer (A).

Examples of the component (c) include, but are not limited to, acryloylmorpholine, N,N-dimethylacrylamide, N,N-diethylacrylamide, N-vinylpyrrolidone, N-vinyl-N-methylacetamide, N-vinyl-N-ethylacetamide, N-vinyl-N-ethylformamide, and N-vinylformamide. In the production process of a curable composition containing the polymer (A) as a component, the compatibility between the polymer (A) and the hydrophilic monomer (B) is improved, and from the viewpoint of contributing to improving the transparency of the cured product, the component (c) is preferably N,N-dimethylacrylamide, N,N-diethylacrylamide, or N-vinylpyrrolidone.

The content of component (c) in polymer (A1) is not particularly limited, but is, for example, 1 to 50% by weight, preferably 3 to 40% by weight, and more preferably 5 to 30% by weight, based on the total weight of all comonomer components. If the blending amount is less than 1% by weight, the compatibility with the hydrophilic monomer used in the curable composition becomes poor, and the curable composition becomes cloudy. If the blending amount is more than 50% by weight, the viscosity of the polymer increases, and workability becomes poor. Note that component (c) can be used alone or in a mixture of two or more kinds in any ratio.

In step 1, polymer (A1) may be obtained by polymerizing an alkyl group-containing monomer (d) (hereinafter also referred to as "component (d)") having one ethylenically unsaturated group and having 1 to 18 carbon atoms together with components (a) to (c). Component (d) does not have a hydroxy group, an amide group, or silicon. Component (d) is a component that contributes to the compatibility of component (b) and component (c).

Examples of the component (d) include linear, branched, or cyclic alkyl (meth)acrylates such as: methyl (meth)acrylate, ethyl (meth)acrylate, propyl (meth)acrylate, i-propyl (meth)acrylate, n-butyl (meth)acrylate, i-butyl (meth)acrylate, t-butyl (meth)acrylate, n-butoxyethyl (meth)acrylate, n-butoxydiethylene glycol (meth)acrylate, pentyl (meth)acrylate, trimethylcyclohexyl (meth)acrylate, t-butylcyclohexyl (meth)acrylate, hexyl (meth)acrylate, 2-ethylhexyl (meth)acrylate, cyclohexyl (meth)acrylate, heptyl (meth)acrylate, octyl (meth)acrylate, nonyl (meth)acrylate, decyl (meth)acrylate, dodecyl (meth)acrylate, lauryl (meth)acrylate, tridecyl (meth)acrylate, tetradecyl (meth)acrylate, methoxydiethylene glycol (meth)acrylate, ethoxydiethylene glycol (meth)acrylate, 3-methyltridecyl (meth)acrylate, 6-methyltridecyl (meth)acrylate, 7-methyltridecyl (meth)acrylate, 2, 1,1-dimethyldodecyl (meth)acrylate, 2,7-dimethyl-4,5-diethyloctyl (meth)acrylate, pentadecyl (meth)acrylate, stearyl (meth)acrylate, i-stearyl (meth)acrylate, allyl (meth)acrylate, tricyclodecane (meth)acrylate, isobornyl (meth)acrylate, dicyclopentanyl (meth)acrylate, dicyclopentenyloxyethyl (meth)acrylate, dicyclopentadieneoxyethyl (meth)acrylate, 1-adamantyl (meth)acrylate, 2-methyl-2-adamantyl (meth)acrylate, 2-ethyl-2-adamantyl (meth)acrylate, and 1-adamantyl (meth)acrylate. From the viewpoint of flexibility of the cured product, n-butyl (meth)acrylate, n-octyl (meth)acrylate, 2-ethylhexyl (meth)acrylate, and lauryl (meth)acrylate are preferred.

It is also preferable to use an alkyl group-containing monomer (d-1) having one ethylenically unsaturated group and a urethane bond and having 1 to 18 carbon atoms as component (d) (hereinafter also referred to as "Component (d-1)"). Component (d-1) does not have a hydroxy group, an amide group, or silicon. Component (d-1) contributes to the compatibility of component (b) and component (c) and has the effect of improving the strength of the cured product.

The method for obtaining component (d-1) is not particularly limited, and examples thereof include a method of reacting an alcohol compound (I) having 1 to 18 carbon atoms (hereinafter also simply referred to as "component (I)") with an isocyanate compound (II) having one (meth)acrylate group (hereinafter also simply referred to as " component (II) "); or a method of reacting an isocyanate compound (III) having 1 to 18 carbon atoms (hereinafter also simply referred to as "component (III)") with a (meth)acrylate compound (IV) having one hydroxy group (hereinafter also simply referred to as "component (IV)").

When reacting component (I) with component (II), the target component (d-1) can be obtained by mixing component (II) with component (I) so that the amount of isocyanate groups per equivalent of hydroxy groups is 1.0 to 1.2 equivalents, preferably 1.05 to 1.1 equivalents, and reacting at a reaction temperature of 70 to 90 °C. When reacting component (III) with component (IV), the target component (d-1) can be obtained by mixing component (III) with component (IV) so that the amount of hydroxy groups per equivalent of isocyanate is 1.0 to 1.2 equivalents, preferably 1.05 to 1.1 equivalents, and reacting at a reaction temperature of 70 to 90 °C.

Examples of component (I) include methyl alcohol, ethyl alcohol, butyl alcohol, hexyl alcohol, octyl alcohol, tridecanol, lauryl alcohol, myristyl alcohol, cetyl alcohol, and stearyl alcohol.

Examples of component (II) include 2-isocyanatoethyl methacrylate (Karenz (registered trademark) MOI manufactured by Resonac Corporation), 2-isocyanatoethyl acrylate (Karenz (registered trademark) AOI manufactured by Resonac Corporation), and 2-(2-methacryloyloxyethyloxy)ethyl isocyanate (Karenz (registered trademark) MOI-EG manufactured by Resonac Corporation).

Examples of the component (III) include methyl isocyanate, ethyl isocyanate, butyl isocyanate, hexyl isocyanate, heptyl isocyanate, octyl isocyanate, nonyl isocyanate, decyl isocyanate, dodecyl isocyanate, and octadecyl isocyanate (Millionate O, manufactured by Hodogaya Chemical Co., Ltd.).

Examples of component (IV) include hydroxy C2 to C4 alkyl (meth)acrylates such as hydroxyethyl (meth)acrylate, hydroxypropyl (meth)acrylate, and hydroxybutyl (meth)acrylate, dimethylolcyclohexyl mono(meth)acrylate, hydroxycaprolactone (meth)acrylate, hydroxy group-terminated polyalkylene glycol (meth)acrylate, and glycerin mono (meth)acrylate.

Component (d-1) is commercially available as 2 -[[(butylamino)carbonyl]oxy]ethyl acrylate (manufactured by Sigma-Aldrich) represented by the following formula (2).

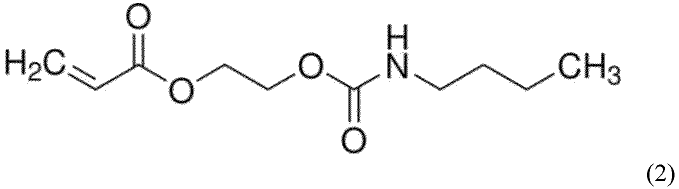

The content of component (d) in polymer (A1) is not particularly limited, but is, for example, 1 to 50% by weight, preferably 3 to 40% by weight, and more preferably 5 to 30% by weight, based on the total weight of all comonomer components. If the blending amount is less than 1% by weight, the effect of improving the compatibility between components (b) and (c) cannot be obtained. If the blending amount is more than 50% by weight, a cured product with high strength cannot be obtained.

In order to improve the performance of the polymer (A), any material other than the components (a) to (d) may be added. Examples of materials other than the components (a) to (d) are given below, but are not limited thereto.

In order to impart an ultraviolet shielding function to the polymer (A), a monomer that absorbs ultraviolet light can be used. Examples of the monomer that absorbs ultraviolet light include 2-(2'-hydroxy-5'-methacryloyloxyethylphenyl)-2H-benzotriazole (trade name: RUVA-93, manufactured by Otsuka Chemical Co., Ltd.), 2-hydroxy-4-(meth)acryloyloxybenzophenone, 2-hydroxy-4-(meth)acryloyloxy-5-t-butylbenzophenone, 2-(2'-hydroxy-5'-(meth)acryloyloxyethylphenyl)-5-chloro-2H-benzotriazole, and 2-hydroxy-4-methacryloyloxymethylphenyl benzoate.

A monomer having a fluoroalkyl group can be used to impart an antifouling function against components such as proteins and lipids in tear fluid to the cured product of the polymer (A). Examples of the monomer having a fluoroalkyl group include trifluoroethyl (meth)acrylate, tetrafluoroethyl (meth)acrylate, trifluoropropyl (meth)acrylate, tetrafluoropropyl (meth)acrylate, pentafluoropropyl (meth)acrylate, hexafluorobutyl (meth)acrylate, hexafluoroisopropyl (meth)acrylate, heptafluorobutyl (meth)acrylate, octafluoropentyl (meth)acrylate, nonafluoropentyl (meth)acrylate, dodecafluoropentyl (meth)acrylate, dodecafluoroheptyl (meth)acrylate, dodecafluorooctyl (meth)acrylate, and tridecafluoroheptyl (meth)acrylate. Trifluoroethyl (meth)acrylate, tetrafluoroethyl (meth)acrylate, hexafluoroisopropyl (meth)acrylate, octafluoropentyl (meth)acrylate, and dodecafluorooctyl (meth)acrylate are preferably used, and trifluoroethyl (meth)acrylate is most preferred.

In order to improve the storage stability of the polymer (A), a monomer having a polymerization inhibitor effect can be used. Examples of the monomer having a polymerization inhibitor effect include 4-hydroxyphenyl methacrylate (trade name: PQMA, manufactured by Showa Denko Materials Co., Ltd.), 4-hydroxyphenyl acrylamide (trade name: HMAd, manufactured by Osaka Organic Chemical Industry Co., Ltd.), 4-allyl-2,6-di- t-butylphenol (trade name: TRIAM-100, manufactured by Fujifilm Wako Pure Chemical Industries, Ltd.), 2-[1-(2-hydroxy-3,5-di-tert-pentylphenyl)ethyl]-4,6-di-tert-pentylphenyl acrylate (trade name: Sumilizer GS, manufactured by Sumitomo Chemical Co., Ltd.), and 2,4-di-t-amyl-6-[1-(3,5-di-t-amyl-2-hydroxyphenyl)ethyl]phenyl acrylate (trade name: Sumilizer GM, manufactured by Sumitomo Chemical Co., Ltd.).

The polymer (A1) can be obtained by a conventionally known method such as solution polymerization, bulk polymerization, suspension polymerization, etc. For example, in the case of solution polymerization, the polymer (A1) can be obtained by dropping a monomer solution in which a comonomer is mixed in a predetermined ratio in an organic solvent and a polymerization initiator under a nitrogen gas flow at a reaction temperature of 80 to 150 °C to cause a polymerization reaction.

Examples of the polymerization initiator include a cationic polymerization initiator, an anionic polymerization initiator, and a radical polymerization initiator, and the radical polymerization initiator is preferable.

Examples of the radical polymerization initiator include various azo compounds or peroxides as thermal radical polymerization initiators. Specific examples include 2,2'-azobisisobutyronitrile, 1,1'-azobis(cyclohexane-1-carbonitrile), 2,2'-azobis(2,4-dimethylvaleronitrile), 2,2'-azobis(2-methylbutyronitrile), 2,2'-azobis(4-methoxy-2,4-dimethylvaleronitrile), 2,2'-azobisbutyrate dimethyl, 2,2'-azobis(2,4,4-trimethylpentane)diisobutyryl peroxide, di(3,5,5-trimethylhexanoyl)peroxide, dilauroyl peroxide, and distearoyl peroxide., di-n-propyl peroxydicarbonate, diisopropyl peroxydicarbonate, di(4-tert-butylcyclohexyl)peroxydicarbonate, di(2-ethoxyethyl)peroxydicarbonate, di(2-ethylhexyl)peroxydicarbonate, di(3-methoxybutyl)peroxydicarbonate, cumyl peroxyneodecanoate, 1,1,3,3-tetramethylbutyl peroxyneodecanoate, 1-cyclohexyl-1-methylethyl peroxyneodecanoate, tert-hexyl peroxyneodecanoate, tert-butyl peroxy neodecanoate, tert-hexyl peroxy pivalate, tert-butyl peroxy pivalate, 1,1,3,3-tetramethylbutyl peroxy 2-ethylhexanoate, 2,5-dimethyl-2,5-di(2-hexanoyl)peroxyhexane, tert-hexyl peroxy 2-ethylhexanoate, tert-butyl peroxy 2-ethylhexanoate, tert-butyl peroxy isobutyrate, tert-hexyl peroxy isopropyl carbonate, tert-butyl peroxymaleic acid, tert-butylperoxy-3,5,5-trimethylhexanoate, tert-butylperoxylaurate, 2,5-dimethyl-2,5-di(3-methylbenzoylperoxy)hexane, tert-butylperoxyisopropyl carbonate, tert-butylperoxy-2-ethylhexyl carbonate, tert-hexylperoxybenzoate, 2,5-dimethyl-2,5-di(benzoylperoxy)hexane, tert-butylperoxyacetic acid, tert-butylperoxybenzoate, etc. One type of radical polymerization initiator may be used alone, or two or more types may be mixed in any desired ratio.

Cationic polymerization initiators include inorganic acids such as sulfuric acid and hydrochloric acid, organic acids such as CF₃COOH and CCl₃COOH, and superacids such as CF₃SO₃H and HClO₄.

Examples of the anionic polymerization initiator include butyl lithium, Na-naphthalene complex, alkali metals, alkyl lithium compounds, sodium amide, Grignard reagents, and lithium alkoxides.

The amount of the polymerization initiator is not particularly limited, but is, for example, 0.01 to 10.0% by weight, preferably 0.05 to 9.0% by weight, and more preferably 0.1 to 8.0% by weight, based on the total weight of the comonomer. If the amount of the polymerization initiator is less than 0.01% by weight, the molecular weight of the polymer (A1) becomes high, making it difficult to apply the curable composition. If the amount of the polymerization initiator is 10.0% by weight or more, the molecular weight of the polymer (A1) becomes low, making it difficult to obtain a cured product with appropriate strength.

Examples of organic solvents used in the polymerization reaction include aromatics such as toluene and xylene, ketones such as acetone, methyl ethyl ketone and methyl isobutyl ketone, and esters such as ethyl acetate, n-butyl acetate and propyl acetate, which may be used alone or in combination. Toluene is preferred because it has good solubility for the polymer (A1).

Next, step 3 will be described.

The polymer (A) of the present invention is obtained by purifying the polymer (A2) by removing impurities such as the solvent, unpolymerized monomer, monomer raw material, polymerization initiator, and decomposition products of the polymerization initiator from the polymer (A2) using a subcritical or supercritical fluid.

The purification method involves contacting the polymer before purification with a subcritical or supercritical fluid in a pressure vessel, and controlling the pressure and temperature in the pressure vessel so that the subcritical or supercritical fluid extracts impurities from the polymer. Specifically, the pressure and temperature in the pressure vessel are controlled so that the polymer becomes insoluble in the subcritical or supercritical fluid, and the subcritical or supercritical fluid dissolves the impurities. Next, the subcritical or supercritical fluid in which the impurities are dissolved is discharged from the pressure vessel, and the purified polymer remaining in the pressure vessel is recovered. The impurities are separated from the subcritical or supercritical fluid by reducing the pressure of the subcritical or supercritical fluid discharged from the pressure vessel.

The subcritical or supercritical fluid used in the present invention is not particularly limited, and examples thereof include carbon dioxide, nitrous oxide, sulfur hexafluoride, xenon, trifluoromethane, and monofluoromethane. Carbon dioxide is preferred because it does not remain in the polymer (A) after purification, and is highly safe and easy to handle.

In addition, in order to adjust the polarity and improve the efficiency of removing the target substance, an extraction aid (hereinafter, entrainer) can be used together with the subcritical or supercritical fluid. Examples of the entrainer include water, methanol, ethanol, 1-propanol, 2-propanol, 1-hexanol, 2-methoxyethanol, tetrahydrofuran, 1,4-dioxane, and acetonitrile. In consideration of ease of handling, methanol, ethanol, 1-propanol, 2-propanol, 2-methoxyethanol, and 1,4-dioxane are preferably used, and one or more kinds can be mixed in any ratio and used.

When carbon dioxide is selected as the subcritical or supercritical fluid, the ratio of carbon dioxide to the entrainer is not particularly limited, but is preferably 80% by weight to 99.9% by weight of carbon dioxide and 0.1 to 20% by weight of the entrainer, more preferably 78% by weight to 99.8% by weight of carbon dioxide and 0.2 to 22% by weight of the entrainer, and particularly preferably 75% by weight to 99.8% by weight of carbon dioxide and 0.2 to 25% by weight of the entrainer. If the carbon dioxide is less than 75% by weight, not only the impurities but also the polymer (A2) is removed, resulting in a poor yield.

Subcritical or supercritical fluids are used at various temperatures and pressures according to the properties of the fluid, but when carbon dioxide is used, a subcritical fluid is used at a temperature of 16 °C to 31 °C and a pressure of at least 4.9 MPa, and a supercritical fluid is used at a temperature of 31 °C to 120 °C and a pressure of at least 7.4 MPa, preferably 10 MPa or more, more preferably 20 MPa or more, and particularly preferably 25 MPa or more. The fluid to be contacted may be in either the subcritical state or the supercritical state, or treatment may be performed with a fluid in both states.

The polymer (A) of the present invention preferably has a weight average molecular weight (Mw) of 5,000 to 300,000, more preferably 30,000 to 250,000, and particularly preferably 50,000 to 200,000. In the present invention, the weight average molecular weight (Mw) is measured by a GPC (gel permeation chromatography) method described in the examples below.

### [Curable composition]

The curable composition of the present invention contains a polymer (A) (hereinafter also referred to as "component (A)"), a hydrophilic monomer (B) (hereinafter also referred to as "component (B)"), and a radical polymerization initiator (C) (hereinafter also referred to as "component (C)").

In the curable composition of the present invention, component (A) may be used alone or in a mixture of two or more kinds in any ratio. The content of component (A) is preferably 30 to 99% by weight, more preferably 50 to 99 % by weight, even more preferably 60 to 95% by weight, particularly preferably 70 to 90 % by weight, and most preferably 75 to 90% by weight, based on the total amount of the curable composition of the present invention. If the content is less than 30% by weight, a cured product having high oxygen permeability cannot be obtained. If the content is more than 99% by weight, the viscosity of the curable composition becomes too high, resulting in poor workability.

The hydrophilic monomer (B) is not particularly limited, and examples thereof include 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, glycerol (meth)acrylate, butoxyethylene glycol (meth)acrylate, caprolactone-modified 2-hydroxyethyl (meth)acrylate, acryloylmorpholine, hydroxyethyl (meth)acrylamide, N,N-dimethylacrylamide, N,N-diethylacrylamide, N-vinylpyrrolidone, acrylic acid, methacrylic acid, polyethylene glycol mono(meth)acrylate, N-vinyl-N-methylacetamide, N-vinyl-N-ethylacetamide, N-vinyl-N-ethylformamide, and N-vinylformamide, N-(4-hydroxyphenyl)maleimide, but are not limited thereto. N,N-dimethylacrylamide, N,N-diethylacrylamide, N-vinylpyrrolidone, and 2-hydroxyethyl methacrylate are preferred.

The hydrophilic monomer (B) may be any monomer that is soluble in water in any proportion, and may be the same as or different from the hydroxy group-containing monomer of the first group and the amide group-containing monomer (c) having one ethylenically unsaturated group.

In the curable composition of the present invention, component (B) may be used alone or in a mixture of two or more kinds in any ratio. The content of component (B) is preferably 1 to 70% by weight, more preferably 1 to 50 % by weight, even more preferably 5 to 40 % by weight, particularly preferably 10 to 30 % by weight, and most preferably 10 to 25% by weight, based on the total amount of the curable composition of the present invention. If it is less than 1% by weight, the viscosity of the curable composition becomes too high, resulting in poor workability. If it is more than 70% by weight, a cured product with high oxygen permeability cannot be obtained.

The radical polymerization initiator (C) used in the curable composition of the present invention includes a thermal radical polymerization initiator and a photoradical polymerization initiator.

The thermal radical polymerization initiator is not particularly limited, and examples thereof include various azo compounds or peroxides. Specific examples thereof include 2,2'-azobisisobutyronitrile, 1,1'-azobis(cyclohexane-1-carbonitrile), 2,2'-azobis(2,4-dimethylvaleronitrile), 2,2'-azobis(2-methylbutyronitrile), 2,2'-azobis(4-methoxy-2,4-dimethylvaleronitrile), 2,2'-azobisbutyrate dimethyl, 2,2'-azobis(2,4,4-trimethylpentane)diisobutyryl peroxide, di(3,5,5-trimethylhexanoyl)peroxide, dilauroyl peroxide, and distearoyl peroxide, di-n-propyl peroxydicarbonate, diisopropyl peroxydicarbonate, di(4-tert-butylcyclohexyl)peroxydicarbonate, di(2-ethoxyethyl)peroxydicarbonate, di(2-ethylhexyl)peroxydicarbonate, di(3-methoxybutyl)peroxydicarbonate, cumyl peroxyneodecanoate, 1,1,3,3-tetramethylbutyl peroxyneodecanoate, 1-cyclohexyl-1-methylethyl peroxyneodecanoate, tert-hexyl peroxyneodecanoate, tert-butyl peroxy neodecanoate, tert-hexyl peroxy pivalate, tert-butyl peroxy pivalate, 1,1,3,3-tetramethylbutyl peroxy 2-ethylhexanoate, 2,5-dimethyl-2,5-di(2-hexanoyl)peroxyhexane, tert-hexyl peroxy 2-ethylhexanoate, tert-butyl peroxy 2-ethylhexanoate, tert-butyl peroxy isobutyrate, tert-hexyl peroxy isopropyl carbonate, tert-butylperoxymaleic acid, tert-butylperoxy-3,5,5-trimethylhexanoate, tert-butylperoxylaurate, 2,5-dimethyl-2,5-di(3-methylbenzoylperoxy)hexane, tert-butylperoxyisopropylcarbonate, tert-butylperoxy-2-ethylhexylcarbonate, tert-hexylperoxybenzoate, 2,5-dimethyl-2,5-di(benzoylperoxy)hexane, tert-butylperoxyacetic acid, and tert-butylperoxybenzoate.

The photoradical polymerization initiator is not particularly limited, but may be, for example, various benzoin derivatives. Specific examples thereof include 2,2-dimethoxy-1,2-diphenylethane-1-one, 1-hydroxy-cyclohexyl-phenyl-ketone, 2-hydroxy-2-methyl-1-phenyl-propan-1-one, 1- [4-(2hydroxyethoxy)-phenyl]-2-hydroxy-2-methyl-1-propan-1-one, 2-hydroxy-1-[4-[4-(2-hydroxy-2-methyl-propionyl)-benzyl]phenyl]-2-methyl-propan-1-one, phenyl glyoxylic acid methyl ester, 2-methyl-1-(4-methylthiophenyl)-2-morpholinopropan-1-one, 2-benzyl-2-dimethylamino-1-(4-morpholinophenyl)-butanone-1,2-(dimethylamino)-2-[(4 -methylphenyl)methyl]-1-[4-(4-morpholinyl)phenyl]-1-butanone, 2,4,6-trimethylbenzoyl-diphenyl-phosphine oxide, bis(2,4,6-trimethylbenzoyl)-phenylphosphine oxide, 1,2-octanedione 1-[4-(phenylthio)-2-(O-benzoyloxime)], ethanone 1-[9-ethyl-6-(2-methylbenzoyl)-9H-carbazol-3-yl]-1-(O-acetyloxime), and the like.

In the curable composition of the present invention, component (C) may be used alone or in a mixture of two or more kinds in any ratio. The content of component (C) is preferably 0.01 to 1.0 % by weight, more preferably 0.05 to 0.5% by weight, based on the total amount of the curable composition of the present invention. If it is less than 0.01% by weight, the polymerization reaction is insufficient and a cured product having appropriate strength cannot be obtained. If it is more than 1.0% by weight, the polymerization rate is fast, resulting in an uneven reaction, and a cured product having appropriate strength cannot be obtained.

In order to improve transparency, the curable composition of the present invention may contain an alkyl group-containing monomer (D) (hereinafter also referred to as "component (D)") having one ethylenically unsaturated group and having 1 to 18 carbon atoms. The component (D) is not particularly limited, and the monomers exemplified as the component (d) of the polymer (A) can be used. The content of the component (D) in the curable composition of the present invention is not particularly limited, but for example, the content in the total amount of the curable composition of the present invention is 1.0 to 30.0 wt%, preferably 3.0 to 18.0 wt%. If the blending amount is less than 1.0 wt%, there is no transparency improvement effect. Also, if it exceeds 20.0 wt%, the crosslinked structure becomes dense, and the flexibility of the cured product tends to decrease.

In the curable composition of the present invention, a crosslinkable monomer may be used for the purpose of reinforcing the strength of the cured product. The crosslinkable monomer is not particularly limited as long as it is a compound having two or more (meth)acrylic groups or vinyl groups in the molecule. Specific examples of the crosslinkable monomer include, but are not limited to: (meth)acrylate-based crosslinkable monomers such as ethylene glycol di(meth)acrylate, diethylene glycol di(meth)acrylate, 1,9-nonanediol di(meth)acrylate, triethylene glycol di(meth)acrylate, propylene glycol di(meth)acrylate, polypropylene glycol di(meth)acrylate, dipropylene glycol di(meth)acrylate, trimethylolpropane tri(meth)acrylate, pentaerythritol tri(meth)acrylate, pentaerythritol tetra(meth) acrylate, and dipentaerythritol hexa(meth)acrylate; vinyl crosslinkable monomers such as allyl methacrylate, diallyl maleate, diallyl fumarate, diallyl succinate, diallyl phthalate, triallyl cyanurate, triallyl isocyanurate, diethylene glycol bisallyl carbonate, triallyl phosphate, triallyl trimellitate, diallyl ether, N,N-diallyl melamine, and divinyl benzene; and α,ω-methacryloxypropyl polydimethylsiloxane. One of these crosslinkable monomers may be used alone, or two or more may be mixed and blended.

The content of the crosslinking monomer in the curable composition of the present invention is not particularly limited, but for example, the content in the total amount of the curable composition of the present invention is 0.1 to 5.0 wt%, preferably 0.3 to 3.0 wt%. If the content is less than 0.1 wt%, there is no reinforcing effect on the strength of the cured product. On the other hand, if it exceeds 5 wt%, the crosslinked structure becomes dense, and the flexibility of the cured product tends to decrease.

### [Silicone hydrogel contact lenses]

The silicone hydrogel contact lens of the present invention can be obtained by polymerizing the curable composition of the present invention. As a method for producing the silicone hydrogel contact lens of the present invention, a known method can be used, such as a method of polymerizing the curable composition of the present invention using a mold having a contact lens shape, or a method of polymerizing the curable composition of the present invention in a tubular container and then cutting and polishing the cured product into a lens shape.

### EXAMPLES

The present invention will be described in more detail below with reference to examples, but the present invention is not limited to these examples. In the text, "parts" and "%" are by weight unless otherwise specified.

### [Example 1]

(Step 1) A flask equipped with a stirrer, a dropping funnel, a condenser, and a thermometer was charged with 67.2 g of toluene and heated to 95 °C under a nitrogen stream. A mixed solution of 0.61 g of 2-hydroxyethyl methacrylate, 51.1 g of silicone methacrylate (FM-0711, manufactured by JNC Corporation, molecular weight 1,000), 24.3 g of N,N-dimethylacrylamide, 12.2 g of n-butyl acrylate, 1.83 g of 2-(2'-hydroxy-5'-methacryloyloxyethylphenyl)-2H-benzotriazole (trade name: RUVA-93, manufactured by Otsuka Chemical Co., Ltd.), 7.2 g of toluene, and 0.9 g of azobisisobutyronitrile was charged into the dropping funnel and added dropwise at a constant rate over 2 hours, and the mixture was further aged at the same temperature for 3 hours.
(Step 2) Next, 0.04 g of dibutyltin dilaurate as a reaction catalyst and 0.45 g of dibutylhydroxytoluene as a polymerization inhibitor were added, and then 0.69 g of 2-isocyanatoethyl methacrylate was added and reacted for 10 hours at 95 °C. The isocyanate content after the reaction was determined by adding an excess of amine and back titrating with hydrochloric acid, and it was confirmed that the value was less than 0.05% of the residual amount of isocyanate calculated from the calculated value, and a pre-purification polymer (P-1) was obtained.

### [Example 2]

### (Step 3: Purification with supercritical carbon dioxide)

20.0 g of the unpurified polymer (P-1) obtained in Example 1 was placed in a pressure vessel having an internal volume of about 140 mL and sealed, and carbon dioxide was passed through the vessel at 70 °C and a pressure of 25 MPa for 3 hours to dissolve the impurities in the carbon dioxide supercritical fluid, while the supercritical fluid in which the impurities were dissolved was discharged from the vessel. The vessel was returned to normal pressure, and the polymer (P-2) remaining in the vessel was obtained as the polymer (A) of the present invention. The molecular weight of the obtained polymer (P-2) was measured, and the weight average molecular weight was 25,000.

### [Comparative Example 1]

### Purification by reduced pressure

20.0 g of the unpurified polymer (P-1) obtained in Example 1 was treated in a rotary evaporator at a reduced pressure of -0.01 kPa and 75°C for 3 hours to volatilize and remove impurities. The pressure inside the vessel was returned to normal pressure to obtain polymer (P-3). The molecular weight of the obtained polymer (P-3) was measured and found to be 24,000 in weight average molecular weight.

### [Example 3]

A flask equipped with a stirrer, a dropping funnel, a cooling tube and a thermometer was charged with 111.9 g of toluene, and the temperature was raised to 90 °C under a nitrogen stream, and a mixed solution of 1.40 g of 4-hydroxybutyl acrylate, 84.0 g of silicone methacrylate (FM-0711 manufactured by JNC Corporation, molecular weight 1,000), 14.0 g of N,N-dimethylacrylamide, 25.2 g of n-butyl acrylate, 14 g of toluene, and 1.24 g of azobisisobutyronitrile was charged in a dropping funnel, and was dropped at a constant rate over 2 hours, and was further aged at the same temperature for 3 hours. Next, after adding 0.13 g of triphenylphosphine as a reaction catalyst and 0.13 g of dibutylhydroxytoluene as a polymerization inhibitor, the temperature was raised to 95 °C, 1.50 g of methacrylic anhydride was added, and the mixture was reacted at 95 °C for 5 hours to obtain a polymer (P-4) before purification.

### [Example 4]: Purification with supercritical carbon dioxide

20.0 g of the unpurified polymer (P-4) obtained in Example 3 was placed in a pressure vessel having an internal volume of about 140 mL, sealed, and treated with carbon dioxide at 40 °C and a pressure of 25 MPa for 3 hours. The pressure inside the vessel was returned to normal pressure, and a reactive polymer (P-5) of the present invention was obtained. The molecular weight of the obtained polymer was measured, and the weight average molecular weight was 64,000.

### [Comparative Example 2]: Purification by reduced pressure

20.0 g of the unpurified polymer (P-4) obtained in Example 3 was treated in a rotary evaporator at a reduced pressure of -0.01 kPa and 75°C for 3 hours. The pressure inside the vessel was returned to normal pressure to obtain polymer (P-6). The molecular weight of the obtained polymer was measured and found to be 54,000 in weight average molecular weight.

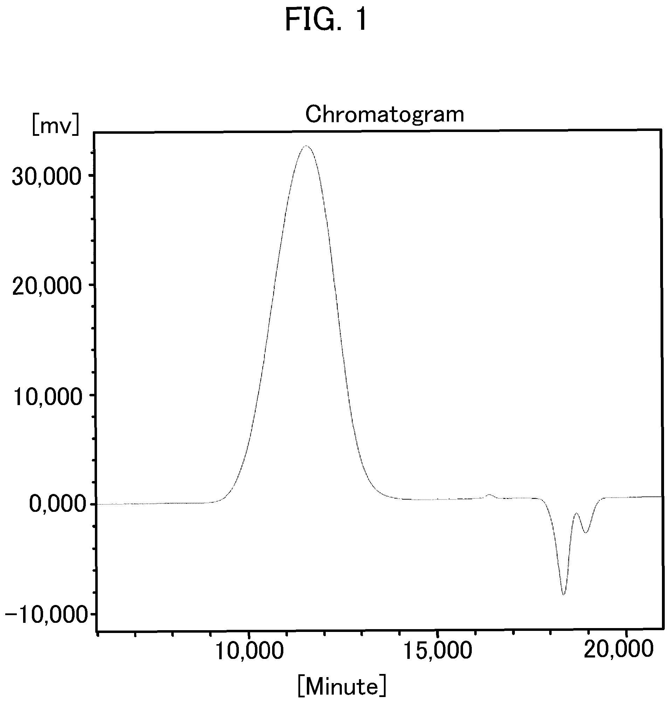

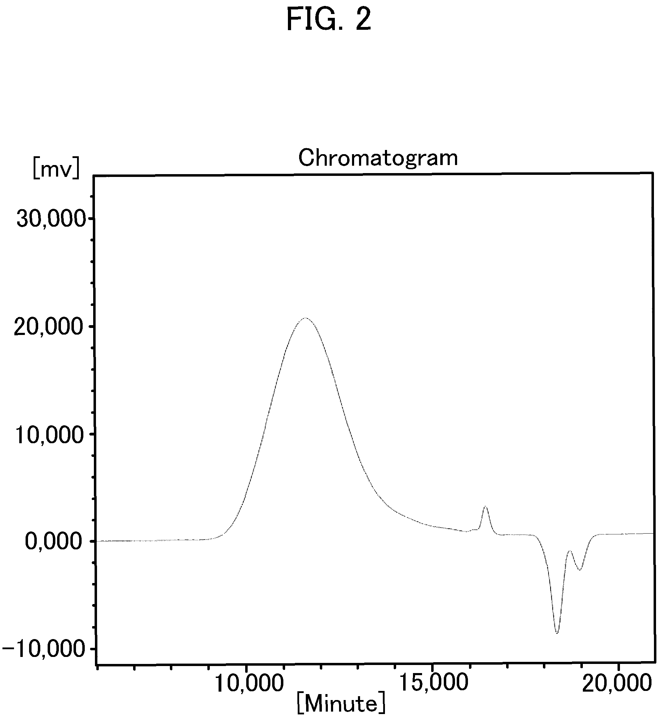

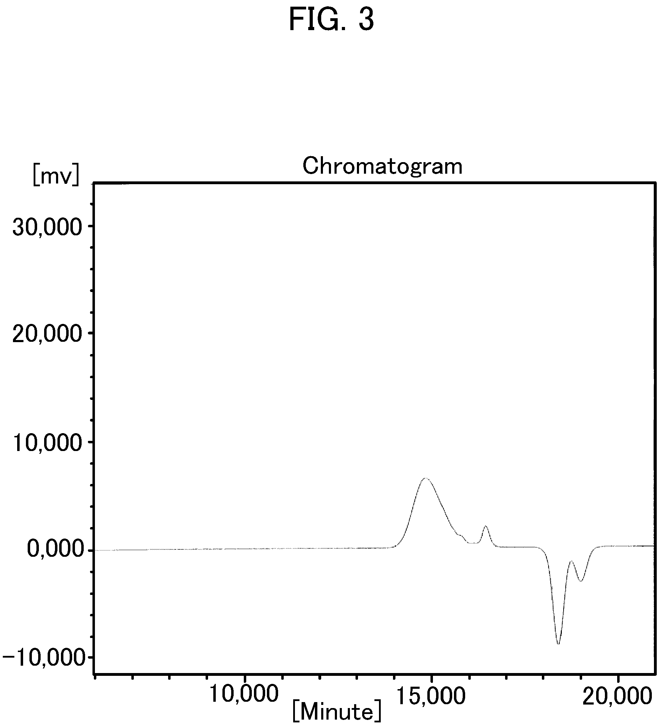

The GPC chart of polymer (P-5) is shown in FIG. 1, the GPC chart of polymer (P-6) is shown in FIG. 2, and the GPC chart of FM-0711 is shown in FIG. 3.

### [Example 5]

(Step 1) A flask equipped with a stirrer, a dropping funnel, a cooling tube, and a thermometer was charged with 63.8 g of toluene and heated to 95 °C under a nitrogen stream. A mixed solution of 1.36 g of 2-isocyanatoethyl methacrylate, 48.0 g of silicone methacrylate (FM-0711, manufactured by JNC Corporation, molecular weight 1,000), 22.9 g of N,N-dimethylacrylamide, 11.4 g of n-butyl acrylate, 1.71 g of 2-(2'-hydroxy-5'-methacryloyloxyethylphenyl)-2H-benzotriazole (product name: RUVA-93, manufactured by Otsuka Chemical Co., Ltd.), 6.8 g of toluene, and 0.9 g of azobisisobutyronitrile was charged into the dropping funnel and added dropwise at a constant rate over 2 hours, and the mixture was further aged at the same temperature for 3 hours.
(Step 2) Next, 0.04 g of dibutyltin dilaurate as a reaction catalyst and 0.45 g of dibutylhydroxytoluene as a polymerization inhibitor were added, and then 1.20 g of 2-hydroxyethyl methacrylate was added and reacted for 10 hours at 95 °C. The isocyanate content after the reaction was determined by adding an excess of amine and back titrating with hydrochloric acid, and it was confirmed that the value was less than 0.05% of the residual amount of isocyanate calculated from the calculated value, and a pre-purification polymer (P-7) was obtained.

### [Example 6]

### (Step 3: Purification with supercritical carbon dioxide)

20.0 g of the unpurified polymer (P-7) obtained in Example 5 was placed in a pressure vessel having an internal volume of about 140 mL and sealed, and carbon dioxide was passed through the vessel at 70 °C and a pressure of 25 MPa for 3 hours to dissolve the impurities in the carbon dioxide supercritical fluid, while the supercritical fluid in which the impurities were dissolved was discharged from the vessel. The vessel was returned to normal pressure, and the polymer (P-8) remaining in the vessel was obtained as the polymer (A) of the present invention. The molecular weight of the obtained polymer (P-8) was measured, and the weight average molecular weight was 29,000.

### [Comparative Example 3]: Purification by reduced pressure

20.0 g of the unpurified polymer (P-7) obtained in Example 5 was treated in a rotary evaporator at a reduced pressure of -0.01 kPa and 75°C for 3 hours to volatilize and remove impurities. The pressure inside the vessel was returned to normal pressure to obtain polymer (P-9). The molecular weight of the obtained polymer (P-9) was measured and found to be 28,000 in weight average molecular weight.

### [Example 7]

(Step 1) A flask equipped with a stirrer, a dropping funnel, a condenser, and a thermometer was charged with 61.3 g of toluene and heated to 95 °C under a nitrogen stream. A mixed solution of 2.22 g of 2-hydroxyethyl methacrylate, 46.6 g of silicone methacrylate (FM-0711, manufactured by JNC Corporation, molecular weight 1,000), 22.2 g of N,N-dimethylacrylamide, 11.1 g of n-butyl acrylate, 6.5 g of toluene, and 0.82 g of azobisisobutyronitrile was charged into the dropping funnel and added dropwise at a constant rate over 2 hours, and the mixture was further aged at the same temperature for 3 hours.
(Step 2) Next, 1.74 g of triethylamine and 0.42 g of dibutylhydroxytoluene as a polymerization inhibitor were added, the temperature was lowered to 60 °C, and 1.78 g of methacrylic acid chloride was added dropwise under stirring, and the reaction was carried out for 2 hours. The reaction liquid was pressure-filtered with a filter paper having a capture particle size of 1 micron to remove triethylamine hydrochloride, and a polymer (P-10) was obtained before purification.

### [Example 8]

### (Step 3: Purification with supercritical carbon dioxide)

20.0 g of the unpurified polymer (P-10) obtained in Example 7 was placed in a pressure vessel having an internal volume of approximately 140 mL and sealed, and a mixed fluid of 98% by weight carbon dioxide and 2% by weight 2-propanol was passed through the vessel at 70°C and a pressure of 25 MPa for 3 hours to dissolve the impurities in the supercritical fluid of carbon dioxide and 2-propanol, while the supercritical fluid in which the impurities were dissolved was discharged from the pressure vessel. Next, carbon dioxide was passed through the vessel at 70°C and a pressure of 25 MPa for 2 hours, and 2-propanol was discharged from the pressure vessel. The vessel was returned to normal pressure, and the polymer (P-11) remaining in the vessel was obtained as the polymer (A) of the present invention. The molecular weight of the resulting polymer (P-11) was measured and found to be 37,000 in weight average molecular weight.

### [Comparative Example 4] : Purification by reduced pressure

20.0 g of the unpurified polymer (P-10) obtained in Example 7 was treated in a rotary evaporator at a reduced pressure of -0.01 kPa and 75°C for 3 hours to volatilize and remove impurities. The pressure inside the vessel was returned to normal pressure to obtain polymer (P-12). The molecular weight of the obtained polymer (P-12) was measured and found to be 36,000 in weight average molecular weight.

In each of the examples and comparative examples, the physical properties were measured as follows.

### (Weight average molecular weight)

The weight average molecular weight (Mw) was measured by GPC (gel permeation chromatography) under the following conditions.
Analytical equipment: GPC HLC-8320GPC manufactured by Tosoh Corporation
Column: SuperMultiporeHZ-H (two columns) manufactured by Tosoh Corporation
Column temperature: 40 °C
Flow rate: 0.35ml/min
Eluent: Tetrahydrofuran
Detector: Differential refractometer
Standard sample: polystyrene

### (Quantitative Analysis of Silicone Methacrylate Monomer FM-0711)

The amount of silicone methacrylate monomer FM-0711 contained in the polymer was determined by LC-MS (liquid chromatography mass spectrometry).
Analytical equipment: UltiMate 3000 manufactured by Thermo Fisher Science
Column: CORTECS C18
Column temperature: 40°C
Mobile phase A: acetonitrile/THF (50/50)
Mobile phase B: 5 mM ammonium acetate aqueous solution
Detector: Photodiode array (PDA) detector 190-800 nm, electrospray ionization (ESI) ± (Mass Range 150-2250)

### (Quantitative determination of toluene, monomer, and initiator)

The amounts of toluene, monomers and initiator remaining in the polymers (P-2), (P-3), (P-5) and (P-6) were quantified by GC-MS (gas chromatography mass spectrometry) using tridecane as an internal standard.
Analytical equipment: Shimadzu Corporation, GC-2010
Column: HP-5MS 30m, 0.25mm, 0.25µm
Carrier gas: He 1.2 mL/min.
Oven: 50°C (2 min.), 10°C/min., 300°C (33 min.)
Inlet: split (30:1), 250°C
Detector: Hydrogen flame ionization detector (FID: Flame Ionization Detector)

The amounts of impurities contained in the polymers (P-2) and (P-3) were measured, and the results are shown in Table 1.

### [Table 1]

**Table 1**

| | Reactive polymer (P-2) after supercritical carbon dioxide purification | Reactive polymer (P-3) after decompression |
|---|---|---|
| FM-0711 | Undetected | 670 ppm |
| 2-HEMA | Undetected | Undetected |
| nBA | Undetected | 900 ppm |
| DMA | Undetected | 2000 ppm |
| RUVA-93 | 100 ppm | 100 ppm |
| MOI | Undetected | Undetected |
| AIBN | Undetected | 3500 ppm |
| toluene | 100 ppm | 19000 ppm |

The abbreviations of the compounds in Table 1 are as follows.
FM-0711 : Silicone methacrylate (manufactured by JNC Corporation)
2-HEMA: 2-hydroxyethyl methacrylate
nBA: n-butyl acrylate
DMA: N,N-dimethylacrylamide
RUVA-93: 2-(2'-hydroxy-5'-methacryloyloxyethylphenyl)-2H-benzotriazole
MOI: 2-isocyanatoethyl methacrylate
AIBN: Azobisisobutyronitrile

The amounts of impurities contained in the polymers (P-5) and (P-6) were measured, and the results are shown in Table 2.

### [Table 2]

**Table 2**

| | Reactive Polymer (P-5) after supercritical carbon dioxide purification | Reactive polymer (P-6) after decompression |
|---|---|---|
| FM-0711 | Undetected | 400 ppm |
| Impurities in FM-0711 | 100 ppm | 1700 ppm |
| 4-HBA | Undetected | Undetected |
| nBA | Undetected | Undetected |
| DMA | Undetected | Undetected |
| MAAH | Undetected | Undetected |
| MAA | 200 ppm | 1500 ppm |
| AIBN | Undetected | 1500 ppm |
| toluene | Undetected | 100 ppm |

The impurities in FM-0711 are thought to be by-products produced during the production of FM-0711, but have not been accurately identified. In Table 2, MAA (methacrylic acid) is a component eliminated after the reaction of the polymer with methacrylic anhydride.

The abbreviations of the compounds in Table 2 are as follows.
FM-0711 : Silicone methacrylate (JNC Corporation)
4-HBA: 4-hydroxybutyl acrylate
nBA: n-butyl acrylate
DMA: N,N-dimethylacrylamide
MAAH: methacrylic anhydride
MAA: methacrylic acid
AIBN: Azobisisobutyronitrile

The amounts of toluene, monomers and initiator remaining in the polymers (P-8) and (P-9) were determined by GC (gas chromatography) using tridecane as an internal standard.
Analyzer: Agilent 7890, manufactured by Agilent
Column: HP-5MS 30m, 0.25mm, 0.25µm
Carrier gas: He 1.2 mL/min.
Oven: 80°C (2 min.), 10°C/min., 300°C (21 min.)
Inlet: split (30:1), 300°C
Detector: Hydrogen flame ionization detector (FID: Flame Ionization Detector)

The amounts of impurities contained in the polymers (P-8) and (P-9) were measured, and the results are shown in Table 3.

### [Table 3]

**Table 3**

| | After supercritical carbon dioxide purification | After decompression |
|---|---|---|
| | Reactive polymer (P- 8) | Reactive polymer (P- 9) |
| FM-0711 | Undetected | 1700ppm |
| MOI | Undetected | Undetected |
| nBA | Undetected | 600 ppm |
| DMA | Undetected | 2100ppm |
| RUVA-93 | Undetected | 200 ppm |
| 2-HEMA | Undetected | 2400ppm |
| AIBN | Undetected | 4300ppm |
| Toluene | Undetected | 1200ppm |

The abbreviations for the compounds in Table 3 are as follows.
FM-0711: Silicone methacrylate (manufactured by JNC Corporation)
2-HEMA: 2-hydroxyethyl methacrylate
nBA: n-butyl acrylate
DMA: N,N-dimethylacrylamide
RUVA-93: 2-(2'-hydroxy-5'-methacryloyloxyethylphenyl)-2H-benzotriazole
MOI: 2-isocyanatoethyl methacrylate
AIBN: Azobisisobutyronitrile

The amounts of toluene and 2-propanol monomer remaining in the polymers (P-11) and (P-12) were determined by GC (gas chromatography) using tridecane as an internal standard.
Analyzer: Agilent 7890, manufactured by Agilent
Column: HP-5MS 30m, 0.25mm, 0.25µm
Carrier gas: He 1.2 mL/min.
Oven: 40°C (5 min.), 10°C/min., 220°C (18 min.)
Inlet: split (30:1), 200°C
Detector: Hydrogen flame ionization detector (FID: Flame Ionization Detector)

The amount of the initiator remaining in the polymers (P-11) and (P-12) was determined by GC (gas chromatography) using tridecane as an internal standard.
Analyzer: Agilent 7890, manufactured by Agilent
Column: HP-5MS 30m, 0.25mm, 0.25µm
Carrier gas: He 1.2 mL/min.
Oven: 80°C (2 min.), 10°C/min., 300°C (21 min.)
Inlet: split (30:1), 300°C
Detector: Hydrogen flame ionization detector (FID: Flame Ionization Detector)

The amount of triethylamine remaining in the polymers (P-11) and (P-12) was determined by GC (gas chromatography) using tridecane as an internal standard.
Analyzer: Agilent 8890, manufactured by Agilent
Column: InterCap for Amines 30m, 0.32mm
Carrier gas: He 1.2 mL/min.
Oven: 50°C (3 min.), 10°C/min., 220°C (10 min.)
Inlet: split (30:1), 260°C
Detector: Hydrogen flame ionization detector (FID: Flame Ionization Detector)

The amounts of impurities contained in the resulting polymers (P-11) and (P-12) were measured, and the results are shown in Table 4.

### [Table 4]

**Table 4**

| | Reactive Polymer (P-11) after supercritical carbon dioxide purification | Reactive Polymer (P-12) after decompression |
|---|---|---|
| FM-0711 | Undetected | 700 ppm |
| 2-HEMA | Undetected | Undetected |
| nBA | Undetected | 200 ppm |
| DMA | Undetected | 400 ppm |
| AIBN | Undetected | 3100 ppm |
| Toluene | 40 ppm | 4600 ppm |
| Triethylam ine | Undetected | Undetected |
| Methacryli c acid | 200 ppm | 600 ppm |
| 2-Propanol | 200 ppm | Undetected |

The abbreviations for the compounds in Table 4 are as follows.
FM-0711 : Silicone methacrylate (manufactured by JNC)
nBA: n-butyl acrylate
DMA: N,N-dimethylacrylamide
2-HEMA: 2-hydroxyethyl methacrylate
AIBN: Azobisisobutyronitrile

In Table 4, methacrylic acid is the reaction product of methacrylic acid chloride and water, and 2-propanol is the entrainer used in the purification with supercritical carbon dioxide.

### [Preparation of Curable Composition]

### [Example 9]

Into a glass bottle, 7.2 g of polymer (P-2) as polymer (A); 0.9 g of N-vinylpyrrolidone, 0.6 g of N,N-diethylacrylamide, 0.4 g of methacrylic acid, and 0.3 g of 4-hydroxybutyl acrylate as hydrophilic monomers (B); 0.6 g of lauryl acrylate as alkyl group-containing monomer (D) having 1 to 18 carbon atoms, and 0.05 g of 1,1'-azobis(cyclohexane-1-carbonitrile) as radical polymerization initiator (C) were prepared and mixed using a planetary centrifugal mixer, thereby obtaining a curable composition of Example 9.

### [Example 10]

Into a glass bottle, 8.0 g of polymer (P-5) as the polymer (A), 2.0 g of N,N-diethylacrylamide as the hydrophilic monomer (B), 0.01 g of ethylene glycol dimethacrylate, and 0.05 g of azobisisobutyronitrile as the radical polymerization initiator (C) were prepared and mixed using a planetary centrifugal mixer, thereby obtaining a curable composition of Example 10.

### [Example 11]

Into a glass bottle, 7.2 g of polymer (P-8) as polymer (A); 0.9 g of N-vinylpyrrolidone, 0.6 g of N,N-diethylacrylamide, 0.4 g of methacrylic acid, and 0.3 g of 4-hydroxybutyl acrylate as hydrophilic monomers (B); 0.6 g of lauryl acrylate as alkyl group-containing monomer (D) having 1 to 18 carbon atoms, and 0.05 g of 1,1'-azobis(cyclohexane-1-carbonitrile) as radical polymerization initiator (C) were prepared and mixed using a planetary centrifugal mixer, thereby obtaining a curable composition of Example 11.

### [Preparation of Silicone Hydrogel Contact Lenses]

The curable compositions obtained in Examples 9 to 11 were placed in the female mold of a polypropylene contact lens mold, and the corresponding male and female molds were fitted together. The contact lens mold thus fitted was placed in a nitrogen atmosphere at 105 °C for 2 hours to polymerize and cure the curable compositions.

After the polymerization was completed, the male and female molds were separated, and the female (male) mold with the cured product attached thereto was immersed in a pure water/ethanol mixed liquid (volume ratio 90/10) at 60 °C for 1 hour to release the cured product from the female (male) mold. The cured product thus obtained was then immersed in physiological saline for 1 hour, and then subjected to high-pressure steam sterilization at 121 °C for 30 minutes to obtain a silicone hydrogel contact lens.

When the resulting silicone hydrogel contact lenses were observed from directly above, they all had a perfect circle shape, and when their light transmittance was measured using a spectrophotometer, they all had a transparency of 90% or more.

### [Example 12]

Into a glass bottle, 7.2 g of polymer (P-11) as the polymer (A); 2.3 g of N,N-diethylacrylamide as the hydrophilic monomer (B); 0.6 g of n-butyl acrylate as the alkyl group-containing monomer (D) having from 1 to 18 carbon atoms; and 0.05 g of azobisisobutyronitrile as the radical polymerization initiator (C) were prepared and mixed using a planetary centrifugal mixer, thereby obtaining a curable composition of Example 12.

### [Example 13]

### [Preparation of Silicone Hydrogel Contact Lenses]

The curable composition obtained in Example 12 was poured into a female mold for a polypropylene contact lens, and the corresponding male and female molds were fitted together. The contact lens mold thus fitted was placed in a nitrogen atmosphere at 105 °C for 2 hours to polymerize and cure the curable composition.

After the polymerization was completed, the male and female molds were separated, and the female (male) mold with the cured product attached was immersed in a pure water/ethanol mixed liquid (volume ratio 95/5) at 60 °C for 1 hour, and the cured product was released from the female (male) mold, and then transferred to physiological saline and immersed for 1 hour to obtain a swollen body. The obtained swollen body was sterilized by high-pressure steam at 121 °C for 30 minutes to obtain the silicone hydrogel contact lens of Example 13.

When observed from directly above, the obtained silicone hydrogel contact lens of Example 13 had a perfect circular shape. Furthermore, when the light transmittance was measured using a spectrophotometer, it was found to have a transparency of 90% or more.

### [Example 14]

### [Preparation of Silicone Hydrogel Contact Lenses]

The curable composition obtained by the same method as in Example 12 was polymerized and cured by the same method as in Example 13, and then the male and female molds were separated, and the female (male) mold to which the cured product was attached was immersed in a pure water/IPA (isopropanol) mixture (volume ratio 50/50) at 60 °C for 1 hour, and the cured product was released from the female (male) mold, and then transferred to physiological saline and immersed for 1 hour to obtain a swollen body. The obtained swollen body was further sterilized by high-pressure steam at 121 °C for 30 minutes to obtain the silicone hydrogel contact lens of Example 14.

When observed from directly above, the obtained silicone hydrogel contact lens of Example 14 had a perfect circle shape. Furthermore, when the light transmittance was measured using a spectrophotometer, it was found to have a transparency of 90% or more.

### [Comparative Example 5]

### [Preparation of Curable Composition]: Preparation using Monomer

The following were prepared in a glass bottle and mixed in a planetary centrifugal mixer: 4.2 g of silicone methacrylate (FM-0711, molecular weight 1,000, manufactured by JNC Corporation) as component (b); 2.3 g of N,N-diethylacrylamide and 2.0 g of N,N-dimethylacrylamide as hydrophilic monomers (B); 1.5 g of n-butyl acrylate as an alkyl group-containing monomer (D) having from 1 to 18 carbon atoms; 0.2 g of ethylene glycol di(meth)acrylate as a crosslinking monomer ; and 0.05 g of azobisisobutyronitrile as a radical polymerization initiator (C) to obtain a curable composition of Comparative Example 5.

### [Comparative Example 6]

### [Preparation of Silicone Hydrogel Contact Lenses]

The obtained curable composition was poured into a female mold for a polypropylene contact lens, and the corresponding male and female molds were fitted together. The contact lens mold thus fitted was placed in a nitrogen atmosphere at 105 °C for 2 hours to polymerize and cure the curable composition.

After the polymerization was completed, the male and female molds were separated, and the female (male) mold with the cured product attached was immersed in a pure water/ethanol mixed liquid (volume ratio 95/5) at 60°C for 1 hour, and the cured product was released from the female (male) mold, and then transferred to physiological saline and immersed for 1 hour to obtain a swollen body. The obtained swollen body was sterilized by high-pressure steam at 121°C for 30 minutes to obtain the silicone hydrogel contact lens of Comparative Example 6.

The light transmittance of the obtained silicone hydrogel contact lens of Comparative Example 6 was measured using a spectrophotometer. Although it had a transparency of 90% or more, when observed from directly above, it was found that it did not have a perfect circular shape and was distorted.

### [Comparative Example 7]

### [Preparation of Silicone Hydrogel Contact Lenses]

The curable composition obtained by the same method as in Comparative Example 2 was polymerized and cured by the same method as in Comparative Example 7, and then the male and female molds were separated, and the female (male) mold to which the cured product was attached was immersed in a pure water/IPA mixture (volume ratio 50/50) at 60°C for 1 hour, and the cured product was released from the female (male) mold, and then transferred to physiological saline and immersed for 1 hour to obtain a swollen body. The obtained swollen body was further sterilized by high-pressure steam at 121°C for 30 minutes to obtain the silicone hydrogel contact lens of Comparative Example 7.

The light transmittance of the obtained silicone hydrogel contact lens of Comparative Example 7 was measured using a spectrophotometer. It was found to have a transparency of 90% or more. However, when observed from directly above, it did not have a perfect circular shape and distortion was confirmed.

Twenty-five pieces of each of the silicone hydrogel contact lenses obtained in Examples 13 and 14 and Comparative Examples 6 and 7 were immersed in 5 mL of acetone and shaken at room temperature for 72 hours to prepare an acetone extract.

The silicone monomer FM-0711 in the acetone extract was quantified by LC-MS (liquid chromatography mass spectrometry). The standard solution concentrations were converted into sample concentrations, and calibration curves were created for concentrations equivalent to 0.1, 0.5, 1.5, and 10 ppm. The results are shown in Table 5.

The silicone monomer FM-0711 in the acetone extract was quantified by LC-MS (liquid chromatography mass spectrometry). The standard solution concentrations were converted into sample concentrations, and calibration curves were created for concentrations equivalent to 0.1, 0.5, 1.5, and 10 ppm. The results are shown in Table 5.
Analytical equipment: Thermo Fisher Science, Q-Exactive
Column: CORTECS C18
Column temperature: 40°C
Mobile phase A: acetonitrile/THF (50/50)
Mobile phase B: 5 mM ammonium acetate aqueous solution
Gradient: A/B = 50/50 - (5) - 95/5 (10)
Detector: Photodiode array (PDA) detector 190-800 nm, electrospray ionization (ESI) ± (Mass Range 200-2500)

### [Table 5]

**Table 5**

| Sample | FM-0711 quantity |
|---|---|
| Example 13 | Less than 0.1 ppm |
| Example 14 | 0.1 ppm |
| Comparative Example 6 | 8.5 ppm |
| Comparative Example 7 | 0.5 ppm |

This application claims priority based on Japanese Patent Application No. 2022-206597 filed on December 23, 2022, Japanese Patent Application No. 2023-146954 filed on September 11, 2023, and Japanese Patent Application No. 2023-181047 filed on October 20, 2023.

### INDUSTRIAL APPLICABILITY

Since the polymer of the present invention has a high purity and no silicon-containing monomer remains after a curable composition using the polymer is cured, there is no need to use a large amount of organic solvent for washing, which makes it possible to provide inexpensive contact lenses.

## Claims

1. A method for producing a polymer (A), comprising:
(step 1) polymerizing a first monomer (a) having an ethylenically unsaturated group to obtain a polymer (A1);
(step 2) reacting the polymer (A1) with a second monomer having an ethylenically unsaturated group to obtain a polymer (A2); and
(step 3) purifying the polymer (A2) using a subcritical or supercritical fluid to obtain a polymer (A),
wherein the first monomer is selected from one of:
a first group consisting of hydroxy group-containing monomers; and
a second group consisting of (meth)acrylic isocyanate compounds, (meth)acrylic anhydrides, and (meth)acrylic acid halide, and
the second monomer is selected from the other of the first group or the second group.

2. The method for producing the polymer (A) according to claim 1, wherein a silicon-containing monomer (b) having one ethylenically unsaturated group is polymerized together with the first monomer (a) in the step 1.

3. The method for producing the polymer (A) according to claim 2, further comprising polymerizing an amide group-containing monomer (c) in the step 1.

4. The method for producing the polymer (A) according to claim 3, wherein in the (step 1), the first monomer (a), the silicon-containing monomer (b), and the amide group-containing monomer (c) are polymerized together with an alkyl group-containing monomer (d) having one ethylenically unsaturated group and having 1 to 18 carbon atoms.

5. The method for producing the polymer (A) according to any one of claims 1 to 4, wherein the first monomer is a hydroxy group-containing monomer.

6. The method for producing the polymer (A) according to claim 5, wherein the second monomer is a (meth)acrylic isocyanate compound.

7. The method for producing polymer (A) according to claim 5, wherein the second monomer is a (meth)acrylic anhydride.

8. The method for producing the polymer (A) according to claim 5, wherein the second monomer is a (meth)acrylic acid halide.

9. The method for producing the polymer (A) according to any one of claims 1 to 4, wherein
the first monomer is a (meth)acrylic isocyanate compound, and
the second monomer is a hydroxy group-containing monomer.

10. The method for producing the polymer (A) according to any one of claims 1 to 9, wherein carbon dioxide alone is used as the subcritical or supercritical fluid.

11. The method for producing the polymer (A) according to any one of claims 1 to 9, wherein a mixture of carbon dioxide and an entrainer is used as the subcritical or supercritical fluid.

12. The method for producing the polymer (A) according to claim 11, wherein the mixture of carbon dioxide and the entrainer comprises 80.0 to 99.9% by weight of carbon dioxide and 0.1 to 20.0% by weight of an entrainer.

13. The method for producing the polymer (A) according to claim 11 or 12, wherein the entrainer is one or more selected from the group consisting of: methanol, ethanol, 1-propanol, 2-propanol, 2-methoxyethanol, and 1,4-dioxane.

14. The method for producing the polymer (A) according to any one of claims 1 to 13, wherein the polymer (A) has a weight average molecular weight of 5,000 to 300,000.

15. A method for producing a curable composition comprising:
the polymer (A) according to any one of claims 1 to 14,
a hydrophilic monomer (B), and
a radical polymerization initiator (C).

16. A method for producing a cured product obtained from the curable composition according to claim 15.

17. A method for producing the curable composition according to claim 15 for use in a contact lens.

18. A method for producing a silicone hydrogel contact lens, using the curable composition for use in the contact lens according to claim 17.
